Europäisches Patentamt

European Patent Office

Office européen des brevets

(19)

(11) EP 1 555 708 A2

(12) # EUROPEAN PATENT APPLICATION

(43) Date of publication:
20.07.2005 Bulletin 2005/29

(51) Int Cl.7: H01M 8/04, H01M 8/02

(21) Application number: 04029610.5

(22) Date of filing: 14.12.2004

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(30) Priority: 15.01.2004 JP 2004008450

(71) Applicant: NISSAN MOTOR CO., LTD.
Yokohama-shi Kanagawa-ken (JP)

(72) Inventor: Saitou, Kazuo
Yokohama-shi Kanagawa 236-0046 (JP)

(74) Representative: Weber, Joachim, Dr.
Hoefer & Partner
Patentanwälte
Gabriel-Max-Strasse 29
81545 München (DE)

(54) **Deterioration diagnosis of fuel cell seal member**

(57) A fuel cell stack (1) housed in a case (2) generates power according to supply of hydrogen gas to a hydrogen gas passage (111) formed inside the case. The hydrogen gas passage (111) is sealed by a seal member (107). The case (2) is ventilated by a ventilation device (7). A sensor (8) detects the hydrogen concentration of gas which a ventilation device (7) discharges from the case (2). The controller (10) calculates a variation rate of the hydrogen concentration after supply of hydrogen gas to the hydrogen gas passage (111) starts (S2), and correctly diagnoses the deterioration state of the seal member (107) from the variation rate (S7, S71, S72).

8  HYDROGEN CONCENTRATION SENSOR
9  TEMPERATURE SENSOR
11  PRESSURE SENSOR

FIG. 1

EP 1 555 708 A2

## Description

FIELD OF THE INVENTION

This invention relates to deterioration diagnosis of a seal member which seals a hydrogen gas passage of a fuel cell.

BACKGROUND OF THE INVENTION

The hydrogen used for power generation of a fuel cell has high permeability, and perfect sealing is not easy. In particular, in a fuel cell stack which is a laminate of many fuel cells, it is difficult to prevent leakage of hydrogen from all fuel cells completely.

Therefore, in a fuel cell stack, a very small amount of hydrogen may leak outside. Since the diffusibility of hydrogen is very high, the leaked hydrogen usually does not reach a flammable concentration.

To protect the fuel cell stack from impact or vibration or prevent contact of the stack at high voltage with other members, the fuel cell stack is housed inside a case. However, when slack occurs in the pipe connections within the case or the seal members of each fuel cell deteriorate, the hydrogen leaked from the fuel cell stack may accumulate in the case and may reach a flammable concentration.

Tokkai Hei 8-31436 published by the Japanese Patent Office in 1996 proposes forced ventilation of the inside of the case by a fan when a sensor which detects hydrogen concentration in the case where the fuel cell stack is installed, detects that the hydrogen concentration in the case is high.

JP2003-017094 A published by the Japanese Patent Office in 2003 focuses on the variation of hydrogen leak amount according to the hydrogen pressure in the fuel cell stack, and controlling the hydrogen pressure so that the leakage amount does not exceed a given amount.

SUMMARY OF THE INVENTION

The ventilation device in the former art is a device which operates only when a considerable amount of hydrogen has leaked inside the case. That is, when the device operates, it means that a considerable leakage of hydrogen has already occurred. Therefore, when the device operates, operation of the fuel cell stack must be immediately suspended from the viewpoint of safety.

In the latter art, the hydrogen pressure is controlled in relation to the concentration of hydrogen which has leaked, so the concentration of leaked hydrogen does not increase more than a fixed amount and the situation where operation of the fuel cell stack must be immediately suspended is avoided. However, in this prior art device, there is no function to diagnose the deterioration of the seal member, and with this device, it is difficult to know when to check or replace the seal member with sufficient precision.

Further, even if there are no defects in the seal member of the fuel cell stack, after the fuel cell stack stops operation, residual hydrogen in the fuel cell stack or hydrogen pipe may leak a little at a time so that it accumulates in the case. In this case, the hydrogen concentration in the case when the fuel cell stack resumes operation will reach a high value. As a result, even if the seal member of the fuel cell stack has no defect, any of the above devices may react in the same way as when there is a defect.

It is therefore an object of this invention to precisely determine deterioration of the seal member of a fuel cell.

In order to achieve the above object, this invention provides a diagnosis device of a seal member used in a fuel cell stack. The seal member seals a hydrogen gas passage which is formed in the fuel cell stack that is housed in a case. The fuel cell stack generates electric power using hydrogen gas that is supplied from outside to the hydrogen passage.

The diagnosis device comprises a ventilation device which ventilates the case, and a programmable controller programmed to calculate a variation rate of a hydrogen concentration of gas in the case after a supply of the hydrogen gas to the hydrogen passage has started in a state where the ventilation device is ventilating the case, and diagnose a deterioration state of the seal member based on the variation rate.

This invention also provides a method of the seal member. The method comprises ventilating the case, detecting a hydrogen concentration of gas in the case, calculating a variation rate of the hydrogen concentration after a supply of the hydrogen gas to the hydrogen passage has started in a state where ventilating of the case is performed, and diagnosing a deterioration state of the seal member based on the variation rate.

The details as well as other features and advantages of this invention are set forth in the remainder of the specification and are shown in the accompanying drawings.

BRIEF DESCRIPTION OF THE DRAWINGS

FIG. 1 is a schematic longitudinal cross-sectional view of the essential parts of a fuel cell power plant according to this invention.

FIG. 2 is a perspective view of a fuel cell stack.

FIG. 3 is a longitudinal cross-sectional view of a fuel cell which is a part of the fuel cell stack.

FIG. 4 is a diagram showing a hydrogen concentration variation in a case of the fuel cell stack when the power plant starts operation.

FIG. 5 is a flow chart describing a seal member deterioration diagnostic routine performed by a controller according to this invention.

FIG. 6 is a diagram describing the characteristics of a map of a temperature correction factor $R_{temp}$

stored by the controller according to this invention.

FIG. 7 is similar to FIG. 5, but showing a second embodiment of this invention.

FIG. 8 is a diagram describing the characteristics of map of a pressure correction factor $R_{press}$ stored by the controller according to the second embodiment of this invention.

FIG. 9 is similar to FIG. 5, but showing a third embodiment of this invention.

FIG. 10 is a diagram describing the characteristics of a map of a hydrogen computation amount correction factor $R_{flow}$ stored by the controller according to a third embodiment of this invention.

DESCRIPTION OF THE PREFERRED EMBODIMENTS

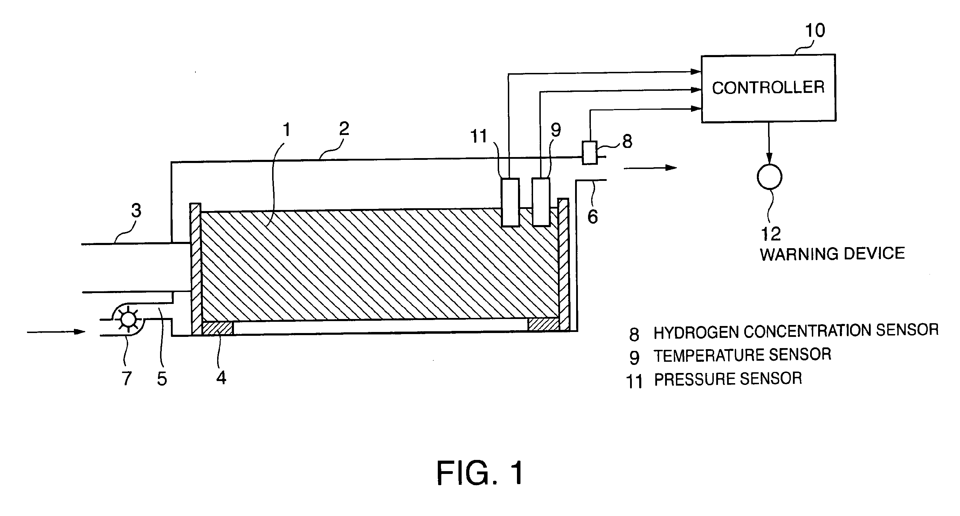

Referring to FIG. 1 of the drawings, a fuel cell power plant according to this invention comprises a fuel cell stack 1 installed in a case 2.

When the fuel cell power plant is used as the power source for a vehicle, compactness is desired. Therefore, the gap formed between the case 2 and the fuel cell stack 1 is small so that the volume difference of the case 2 and the fuel cell stack 1 is small.

A plurality of pipes 3 for supplying fuel gas , air and cooling water to the fuel cell stack 1 are connected to the case 2. The case 2 has an air inlet 5 for aspirating outside air and an air outlet 6 which discharges internal air for ventilation. The air inlet 5 has a ventilation fan 7. A hydrogen concentration sensor 8 which detects hydrogen concentration is installed in the air outlet 6. The case 2 has an approximately rectangular parallelepiped shape, an air inlet 5 being formed in the lower part of one end of the case 2, and an air outlet 6 being formed in the upper part of the other end, respectively.

The fuel cell stack 1 is fixed in the case 2 via a support 4 which comprises an insulating material.

In order to detect the temperature of the fuel cell stack 1, a temperature sensor 9 is attached to the fuel cell stack 1 in the case 2.

Detection data from the hydrogen concentration sensor 8 and the temperature sensor 9 are inputted into a controller 10 installed outside the case 2 via a signal circuit.

The controller 10 comprises a microcomputer comprising a central processing unit (CPU), read-only memory (ROM), random access memory (RAM) and an input-and-output interface (I/O interface). The controller 10 may also be formed from a plurality of microcomputers.

A warning device 12 which outputs a warning when there is a hydrogen leakage is connected to the controller 10 via a signal circuit.

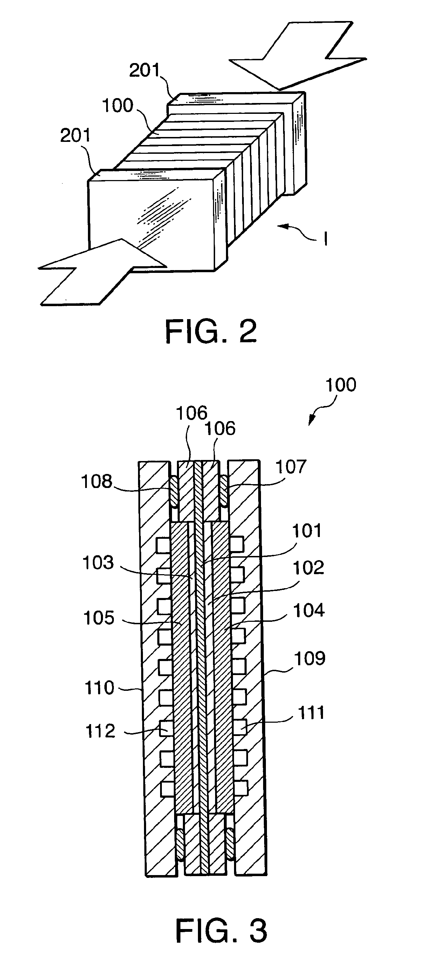

Referring now to FIG. 2, the fuel cell stack 1 is a laminate of a plurality of fuel cells 100 which have a rectangular flat shape, and end plates 201 arranged at both ends of the laminate. The laminated fuel cell 100 is tightened in the lamination direction via end plates 201 situated at both ends.

Referring to FIG. 3, the fuel cell 100 is provided with a polymer electrolyte membrane 101. An anode catalyst layer 102 is formed on one surface of the polymer electrolyte membrane 101, and a cathode catalyst layer 103 is formed on the other surface. An anode gas diffusion layer 104 is disposed in contact with the anode catalyst layer 102, and a cathode gas diffusion layer 105 is disposed in contact with the cathode catalyst layer 103, respectively. An anode bipolar plate 109 comes in contact with the outside of the anode gas diffusion layer 104, and a cathode bipolar plate 110 comes in contact with the outside of the cathode gas diffusion layer 105.

The anode catalyst layer 102 and the cathode catalyst layer 103 have a rectangular flat shape and are smaller than the polymer electrolyte membrane 101. The anode gaseous diffusion layer 104 and the cathode gas diffusion layer 105 have the same flat shape as that of the anode catalyst layer 102 and the cathode catalyst layer 103. The anode bipolar plate 109 and the cathode bipolar plate 110 have the same flat shape as that of the polymer electrolyte membrane 101.

The polymer electrolyte membrane 101 therefore projects outside the anode catalyst layer 102 and the cathode catalyst layer 103. This projection is sandwiched by a pair of frames 106. The frames 106 are sandwiched by the anode bipolar plate 109 and the cathode bipolar plate 110 via seal members 107 and 108.

A groove-like hydrogen gas passage 111 which faces the anode gas diffusion layer 104 is formed in the anode bipolar plate 109. An air passage 112 which faces the cathode gas diffusion layer 105 is formed in the cathode bipolar plate 110. Hydrogen gas is supplied to the hydrogen gas passage 111 via one of the pipes 3 of the case 2 via an anode gas manifold which traverses the fuel cell stack 1 in the axial direction. Air is supplied to the air passage 112 from another pipe 3 via a cathode gas manifold which traverses the fuel cell stack 1 in the axial direction.

The seal members 107, 108 are disposed so that they respectively surround the anode gas diffusion layer 104 and the cathode gas diffusion layer 105 like frames.

The seal member 107 sandwiched by the anode bipolar plate 109 and one of the frames 106 has the role of preventing hydrogen gas in the hydrogen gas passage 111 from leaking to the outside of the fuel cell 100 via the anode gas diffusion layer 104, or the contact surface of the anode gas diffusion layer 104 with the anode bipolar plate 109.

The seal member 108 sandwiched by the cathode bipolar plate 110 and the other frame 106 has the role of preventing air in the air passage 112 from leaking to the outside of the fuel cell 100 via the cathode gas diffusion layer 105, or the contact surface of the cathode gas diffusion layer 105 with the cathode bipolar plate 110.

Although not shown in the figure, a cooling water passage may be formed between the cathode bipolar plate 110 and the anode bipolar plate 109 of an adjacent fuel cell 100. In this case, a seal member which prevents leakage of water or water vapor from the cooling water passage is sandwiched between the cathode bipolar plate 110 and the anode bipolar plate 109 of the adjacent fuel cell 100.

The seal members 107,108, and other seal members if present, elastically deform due to the tightening force in the lamination direction shown by the arrows of FIG. 2 so that they function as seals.

The fuel cells 100 forming the fuel cell stack 1 have the aforesaid construction.

When this power plant starts up, the power supply is first switched ON to supply power to the ventilation fan 7 and start operation of the fan 7. The controller 10 is simultaneously activated, and signals are respectively input indicating the hydrogen concentration in the case 2 from the hydrogen concentration sensor 8, and the temperature of the fuel cell stack 1 from the temperature sensor 9.

Considering that a minute amount of hydrogen leaks from the fuel cell stack 1 when the power plant does not operate, the hydrogen concentration which the hydrogen concentration sensor 8 detects first when the power supply is switched ON will often be higher than during normal operation. The hydrogen concentration therefore largely depends on the elapsed time after the power plant has stopped operating, and the temperature of the fuel cell stack 1.

During the period after the start switch of the power plant is switched ON until the hydrogen gas supply from the pipe 3 to the fuel cell stack 1 is started, the ventilation fan 7 discharges hydrogen which has accumulated in the case 2. The period during which hydrogen gas is swept out of the case 2 without supplying it to the fuel cell stack 1, is hereinafter called a scavenging period.

If the gap between the fuel cell stack 1 and case 2 was large, the hydrogen concentration peaks detected by the hydrogen concentration sensor 8 would differ according to the positions where hydrogen has accumulated. If the scavenging period is set to continue until the hydrogen concentration reaches a peak, even after the scavenging period has ended and hydrogen gas supply has been started, the hydrogen concentration will decrease unless some fault develops in the power plant.

In this power plant, the gap between the fuel cell stack 1 and case 2 is made small, and an air outlet 6 is formed in the upper part of the case 2. Therefore, the period after the start switch is switched ON until the hydrogen concentration reaches a peak is sufficiently short, and the hydrogen concentration which the hydrogen concentration sensor 8 detects reaches a peak almost simultaneously with the startup of the power plant.

In this power plant, therefore, instead of setting the end of the scavenging period at the peak of the hydrogen concentration, the scavenging period is set to the period after the start switch is switched ON until a startup check of auxiliary devices other than the fuel cell stack 1 is complete. During the scavenging period, unless some fault develops, the slope of the hydrogen concentration will always be negative due to the aforesaid reason. When the scavenging period ends, hydrogen supply from the pipe 3 to the fuel cell stack 1 starts automatically.

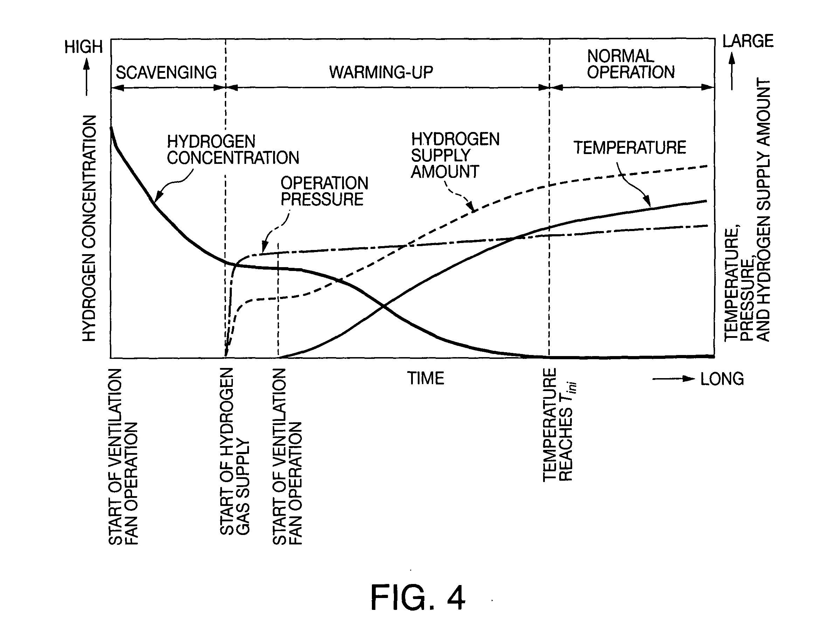

Referring to FIG. 4, when the scavenging period ends, the supply of hydrogen gas from the pipe 3 starts, and if hydrogen gas is supplied to the fuel cell stack 1 with a pressure, a minute amount of hydrogen gas will also begin to leak from the fuel cell stack 1. As a result, the slope of the decrease of hydrogen concentration detected by the hydrogen concentration sensor 8 becomes smaller. However, if the temperature of the fuel cell stack 1 increases after the fuel cell stack 1 starts power generation, the seal performance of the seal member will improve and the leakage amount of hydrogen gas will sharply decrease.

The specification of the seal member is determined beforehand so that it has the highest seal performance over the usual working temperature range of the fuel cell stack 1, i.e., the range from sixty degrees Centigrade to eighty degrees Centigrade. Therefore, the seal performance of the seal member improves with temperature increase of the fuel cell stack 1 after startup, and when a predetermined temperature is reached, in the case of a hydrogen concentration sensor 8 which has the flammable concentration region as its main detection area, the hydrogen concentration falls below the measurement limit. The period from hydrogen gas supply start to when the hydrogen concentration is less than the measurement limit is referred to as a warm-up period. When the warm-up period ends, the fuel cell stack 1 shifts to normal operation.

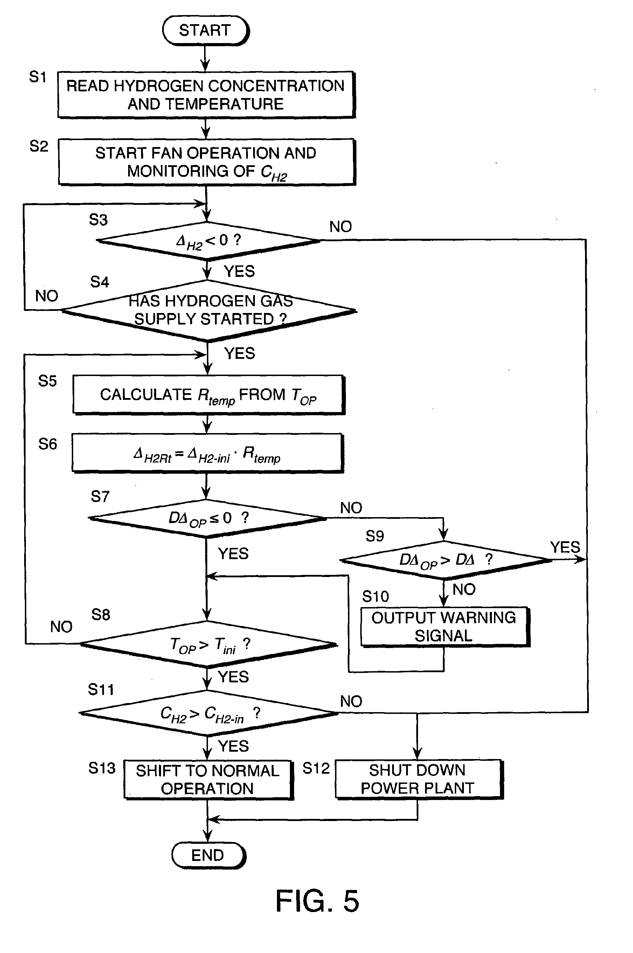

Next, referring to FIG. 5, the deterioration diagnosis routine of the seal member 107 performed by the controller 10 after the start switch of the power plant is switched ON until the warm-up period ends, will be described. The controller 10 performs this routine only once when the start switch of the power plant is switched ON.

When the start switch of the power plant is switched ON, first in a step S1, the controller 10 reads the hydrogen concentration and the temperature detected by the hydrogen concentration sensor 8 and the temperature sensor 9.

In a following step S2, the controller 10 starts operation of the ventilation fan 7, and starts monitoring the hydrogen concentration $C_{H2}$ detected by the hydrogen concentration sensor 8. Subsequently, it continuously monitors the hydrogen concentration $C_{H2}$ via execution of a routine, and the variation rate $\Delta_{H2}$ is calculated if required.

In a step S3, the controller 10 determines whether or not the variation rate $\Delta_{H2}$ of the hydrogen concentration $C_{H2}$ is a negative value. A negative variation rate $\Delta_{H2}$ shows that hydrogen concentration $C_{H2}$ is falling. As mentioned above, in this power plant, the hydrogen concentration $C_{H2}$ reaches a peak almost simultaneously with startup. Therefore, this determination should be affirmative. The determination becomes negative in the case where some fault has occurred. Examples are where there is a hydrogen gas leak outside the case 2, and the leaked hydrogen gas is aspirated into the case 2 due to the operation of the ventilation fan 7. In order to ensure the safety of the power plant in such a case, in a step S12, a command is given to stop operation of the power plant. At this time, an alarm is given to a power plant operator visually or by sound from the warning device 12. After the processing of the step S12, the controller 10 terminates the routine.

On the other hand, in the step S3, if the determination is affirmative, in a step S4, the controller 10 determines whether or not supply of hydrogen gas from the pipe 3 to the fuel cell stack 1 has started. When this determination is negative, the processing of the steps S3, S4 is repeated until the determination becomes affirmative. If the determination of the step S4 is affirmative, it shows that the scavenging in FIG. 4 is complete, and that a shift has occurred to the warm-up period.

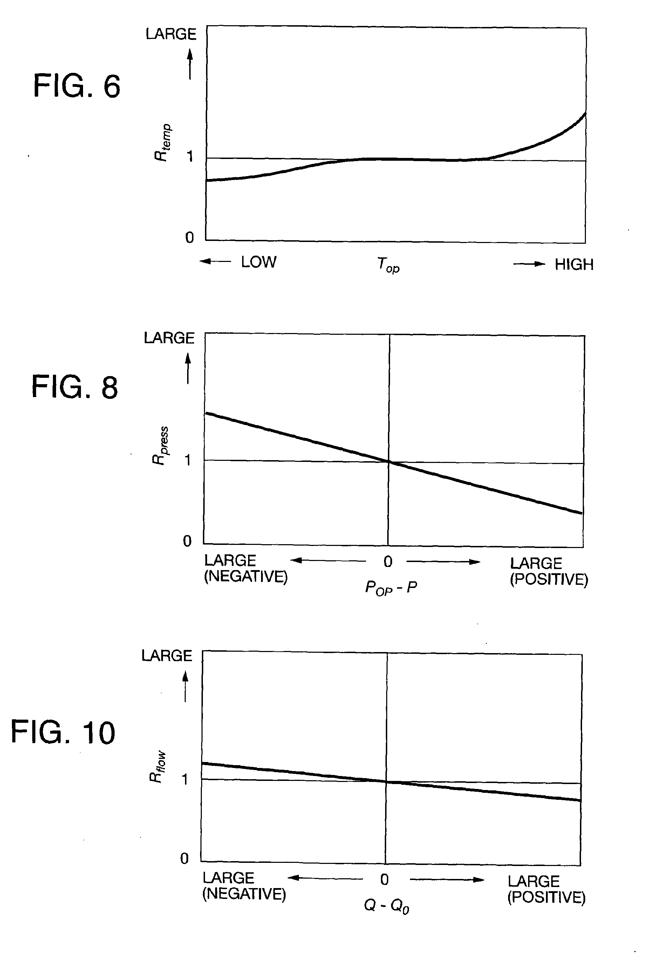

If the determination of the step S4 is affirmative, in a step S5, the controller 10 calculates a temperature correction factor $R_{temp}$ based on a temperature $T_{OP}$ of the fuel cell stack 1 detected by the temperature sensor 9. As mentioned above, since the seal performance of the seal member 107 improves with temperature increase of the fuel cell stack 1, the temperature correction factor $R_{temp}$ based on the temperature $T_{OP}$ of the fuel cell stack 1 is introduced into the deterioration diagnosis of the seal member 107. The controller 10 calculates the temperature correction factor $R_{temp}$ from the temperature $T_{OP}$ of the fuel cell stack 1 by looking up a map having the characteristics shown in FIG. 6 stored beforehand in the internal memory (ROM). As shown in the figure, the temperature correction factor $R_{temp}$ increases as the temperature $T_{OP}$ of the fuel cell stack 1 increases.

In a next step S6, the controller 10 calculates a reference value $\Delta_{H2Rt}$ by the following equation (1):

$$\Delta_{H2Rt} = \Delta_{H2-ini} \cdot R_{temp} \qquad (1)$$

Here, $\Delta_{H2-ini}$ is an initial value which shows the variation rate of the hydrogen concentration detected by the hydrogen concentration sensor 8 at start of warm-up when the seal member 107 is new and has not deteriorated. The reference value $\Delta_{H2Rt}$ calculated by the equation (1) therefore represents the seal performance which the seal member 107 which has not deteriorated should have at the temperature $T_{OP}$. The reference value $\Delta_{H2Rt}$ increases negatively as the temperature $T_{OP}$ increases.

In a following step S7, the controller 10 compares a deviation $D\Delta_{op}$ obtained by subtracting the reference value $\Delta_{H2Rt}$ from the actual variation rate $\Delta_{H2}$ of hydrogen concentration, with zero. If the deviation $D\Delta_{op}$ is less than zero or zero, it shows that the actual variation rate $\Delta_{H2}$ of hydrogen concentration is equal to or greater than the reference value $\Delta_{H2Rt}$ at which there is no deterioration of the seal member 107. In other words, it shows that the present seal performance of the seal member 107 is equal to or greater than the seal performance of a seal member which has not deteriorated. Conversely, when the deviation $D\Delta_{op}$ is a positive value, it shows that some deterioration of the seal member 107.has occurred.

Since the seal performance is good at high temperature, the concentration of hydrogen leaked to the case 2 falls quickly. Specifically, the variation rate $\Delta_{H2}$ of hydrogen concentration shows a large negative value. The reason why the negative value of the reference value $\Delta_{H2Rt}$ used for deterioration diagnosis of the seal member 107 is increased by the temperature correction factor $R_{temp}$ according to the temperature $T_{OP}$ of the fuel cell stack 1 in the step S6, It is to remove the effect of the temperature rise from the deterioration diagnosis.

When the determination of the step S7 is negative, the controller 10, in a step S9, determines whether or not the deviation $D\Delta_{op}$ is greater than a predetermined value $D\Delta$. The predetermined value $D\Delta$ is a positive value and if the deviation $D\Delta_{op}$ is larger than the predetermined value $D\Delta$, it shows that the seal member 107 has deteriorated beyond a tolerance limit. In this case, after processing the above-mentioned step S12, the controller 10 terminates the routine.

In the step S9, if the deviation $D\Delta_{op}$ is not larger than the predetermined value $D\Delta$, although the seal member 107 has deteriorated, it means that the degree of deterioration is still within tolerance level. In this case, in a step S10, the controller 10 outputs a warning signal according to the value of the deviation $D\Delta_{op}$ via the warning device 12, and requests replacement or check of the seal member 107 by the operator. Preferably, the replacement time of the seal member 107 is estimated according to the deviation $D\Delta_{op}$, and a different visual signal or different audio signal for every fixed region of replacement timing is outputted via a planning device 12. Therefore, a map which specifies the relation between the deviation $D\Delta_{op}$ and the replacement timing region is stored beforehand in the memory (ROM) of the controller 10, and the controller 10 specifies the replacement timing region from the deviation $D\Delta_{op}$.

Now, if the determination of the step S7 is affirmative, or after performing the processing of the step S10, the controller 10 processes a step S8.

In the step S8, the controller 10 compares the temperature $T_{OP}$ of the fuel cell stack 1 with a predetermined temperature $T_{ini}$. The predetermined temperature $T_{ini}$ is a temperature at which the seal member 107 within the permitted deterioration region demonstrates sufficient seal performance, and corresponds to the temperature at the end of the warm-up period shown in FIG. 4.

The predetermined temperature $T_{ini}$ is set as follows. Specifically, the predetermined temperature $T_{ini}$ is set so that when the temperature of the fuel cell stack 1 reaches the predetermined temperature $T_{ini}$, the hydrogen concentration is less than a lower limit which can be detected by the hydrogen concentration sensor 8. The value of the predetermined temperature $T_{ini}$ is set experimentally beforehand using a seal member near the limit of the permitted deterioration range.

The seal member 107 demonstrates the highest seal performance in the range from sixty degrees Centigrade to eighty degrees Centigrade as mentioned above. The predetermined temperature $T_{ini}$ is herein set to sixty degrees Centigrade which is the lower limit of this temperature range.

In the step S8, when the temperature $T_{OP}$ of the fuel cell stack 1 does not exceed the predetermined temperature $T_{ini}$, the controller 10 repeats the processing of the steps S5-S10.

In the step S8, when the temperature $T_{OP}$ of the fuel cell stack 1 exceeds the predetermined temperature $T_{ini}$, the controller 10, in a step S11, compares the hydrogen concentration $C_{H2}$ with a predetermined concentration $C_{H2-ini}$. The predetermined concentration $C_{H2-ini}$ is the hydrogen concentration which should be detected by the hydrogen concentration sensor 8 when the temperature of the fuel cell stack 1 reaches the predetermined temperature $T_{ini}$. The predetermined concentration $C_{H2-ini}$ is a lower limit at which the hydrogen concentration can definitely be detected by the hydrogen concentration sensor 8 by the aforesaid method of determining the predetermined temperature $T_{ini}$. In general, the predetermined concentration $C_{H2-ini}$ is zero or a value near zero.

If the temperature $T_{OP}$ of the fuel cell stack 1 reaches the predetermined temperature $T_{ini}$, it means that the temperature region in which the seal member 107 exhibits its highest performance, has been reached. Therefore, if it appears that the hydrogen concentration $C_{H2}$ detected in this state has exceeded the predetermined concentration $C_{H2-ini}$, there is a high possibility that hydrogen gas is leaking from the pipes in the case 2.

In the step S11, when the hydrogen concentration $C_{H2}$ exceeds the predetermined concentration $C_{H2-ini}$, the controller 10, after outputting an alarm to the warning device 12 in a step S12, shuts down the power plant and terminates the routine.

In the step S11, when the hydrogen concentration $C_{H2}$ does not exceed the predetermined concentration $C_{H2-ini}$, the controller 10, in a step S13, outputs a command to the power plant to shift from warm-up operation to normal operation, and terminates the routine.

Control of power plant operation is thereafter performed by the same controller 10 performing another routine, or by another controller dedicated to performing operation.

As mentioned above, according to this routine, based on the variation rate $\Delta_{H2}$ of the hydrogen concentration immediately after startup up of the power plant, it is first determined whether or not there are any abnormalities in the sealing state of the fuel cell stack 1. If there is no fault, the deterioration state of the seal member 107 is determined from the deviation $D\Delta_{opi}$ of the variation rate $\Delta_{H2}$ from the reference value $\Delta_{H2Rt}$ according to the temperature of the fuel cell stack 1. When the deterioration of the seal member 107 is within tolerance level, the presence or absence of a leakage of hydrogen gas in the case 2 is determined from the hydrogen concentration $C_{H2}$ detected after warm-up operation is complete.

Thus, when there is a fault in the sealing state, when the seal member 107 has deteriorated excessively or when hydrogen gas is leaking into the case 2, the controller 10 immediately stops operation of the power plant and outputs a fault alarm to the operator via the warning device.

The controller 10 commands a shift to normal operation of the power plant only when the situation corresponds to none of these cases.

Even in the case where the deterioration of the seal member 107 is within tolerance level, the controller 10 outputs a signal according to the deterioration state of the seal member 107, and informs the operator about the need to replace or check the seal member 107.

Therefore, by executing this routine, hydrogen gas leakage from the fuel cell stack 1 when the power plant starts up can be effectively prevented, and the safety of the power plant regarding hydrogen gas leakage is improved. Moreover, the deterioration state of the seal member 107 can be correctly determined, and it is possible to estimate the replacement time of the seal member 107 beforehand.

Although the direct object of the deterioration determination of this invention is the seal member 107 which seals the hydrogen gas passage 111, it is possible to estimate deterioration of a seal member 108 which seals the air passage 112 and seal members which seal the cooling water passage from the diagnostic result of the seal member 107.

Next, a second embodiment of this invention relating to the routine for diagnosing deterioration of the seal member 107 will be described.

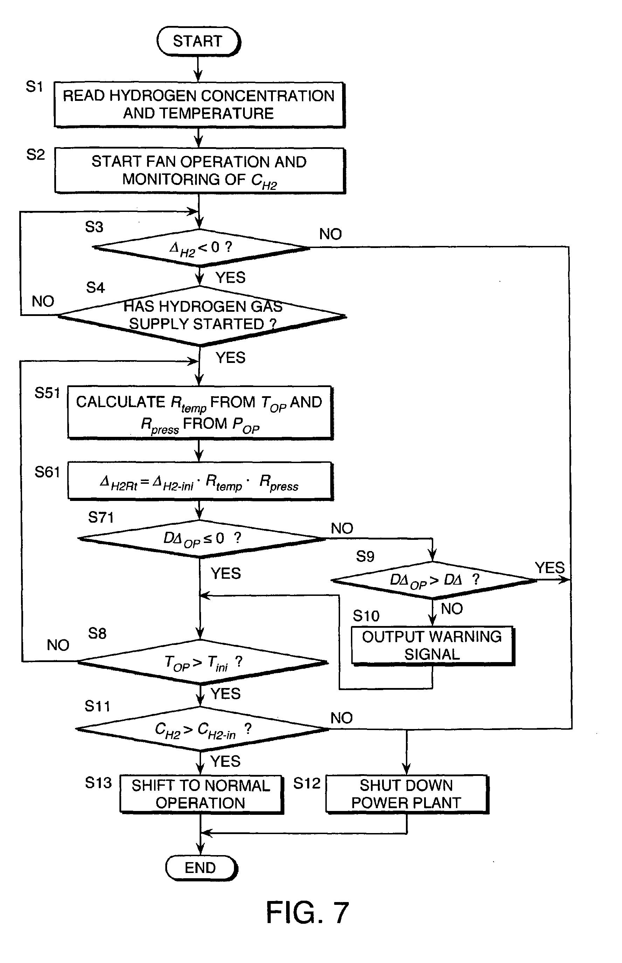

In the first embodiment, in the step S6, the reference value $\Delta_{H2Rt}$ is determined according to the temperature $T_{OP}$ of the fuel cell stack 1, but in this embodiment, the reference value $\Delta_{H2Rt}$ is determined according to a pressure $P_{OP}$ of hydrogen gas as well as to the temperature $T_{OP}$ of the fuel cell stack 1. Therefore, in this embodiment, a pressure sensor 11 which detects the pressure $P_{OP}$ of the hydrogen gas supplied to the fuel cell stack 1 is provided as shown in FIG. 1. Instead of the routine of FIG. 4 of the first embodiment, the controller 10 performs the routine which is shown in FIG. 7.

The routine of FIG. 7 is similar to the routine of FIG. 4, but differs from the routine of FIG. 4 in that a step S51 is provided instead of the step S5, a step S61 is provided instead of the step S6, and a step S71 is provided instead of the step S7. The processing of the other steps is identical to that of the routine of FIG. 4.

The controller 10, in the step S51, calculates a temperature correction factor $R_{temp}$ based on the temperature $T_{OP}$ of the fuel cell stack 1, and calculates a pressure correction factor $R_{press}$ based on the hydrogen gas pressure $P_{OP}$. If the pressure $P_{OP}$ of hydrogen gas is high, hydrogen gas will tend to leak even if the sealing performance of the seal member is the same, and the hydrogen concentration $C_{H2}$ in the case 2 will not easily decrease even if the ventilator fan 7 is operated. Hence, in this embodiment, the pressure correction factor $R_{press}$ which depends on the hydrogen gas pressure $P_{OP}$ is introduced into the deterioration diagnosis of the seal member.

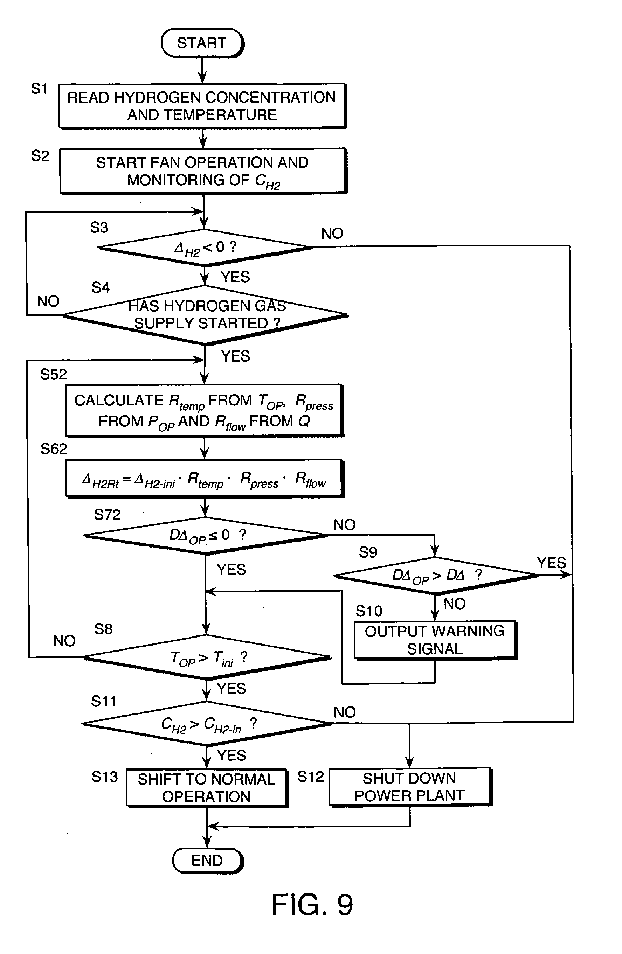

In the step S51, the controller 10 calculates a pressure deviation POP-P0 from the hydrogen gas pressure $P_{OP}$, and calculates the pressure correction factor $R_{press}$ based on the pressure deviation by looking up a map having the characteristics shown in FIG. 8 which is stored beforehand in the internal memory (ROM). $P_0$ is an initial pressure and corresponds to the pressure under the setting conditions of the initial value $\Delta_{H2-ini}$. The pressure correction factor $R_{press}$ decreases the more the hydrogen gas pressure $P_{OP}$ exceeds the initial pressure $P_0$, as shown in the figure. The pressure correction factor $R_{press}$ increases the more the hydrogen gas pressure $P_{OP}$ decreases below the initial pressure $P_0$. When the hydrogen gas pressure $P_{OP}$ is equal to the initial pressure $P_0$, i.e., when the pressure deviation is zero, the pressure correction factor $R_{press}$ is 1.

In the following step S61, the reference value $\Delta_{H2Rtp}$ is calculated by the following equation (2):

$$\Delta_{H2Rtp} = \Delta_{H2-ini} \cdot R_{temp} \cdot R_{press} \qquad (2)$$

In the following step S71, the controller 10 compares the deviation $D\Delta_{op}$ obtained by subtracting the reference value $\Delta_{H2Rtp}$ from the actual variation rate $\Delta_{H2}$ of hydrogen concentration, with zero.

Thus, by using the temperature correction factor $R_{temp}$ according to the hydrogen gas pressure $P_{OP}$ for the reference value $\Delta_{H2Rtp}$ used for diagnosing deterioration of the seal, the effect of the hydrogen gas pressure $P_{OP}$ on the seal performance of the seal member 107 can be eliminated, and deterioration diagnosis precision can be enhanced.

In this embodiment, although the hydrogen gas pressure $P_{OP}$ is detected by the pressure sensor 11, it is also possible to use the hydrogen pressure calculated from the power generation load of the power plant as the hydrogen gas pressure $P_{OP}$.

Next, a third embodiment of this invention relating to a routine for deterioration diagnosis of the seal member 107 will be described.

In this embodiment, a residual hydrogen amount $Q$ of the hydrogen gas passage 111 is taken into consideration as a factor which affects the sealing performance of the seal member 107 in addition to the temperature $T_{OP}$ of the fuel cell stack 1 and the hydrogen gas pressure $P_{OP}$.

The hydrogen gas supplied to the hydrogen gas passage 111 is consumed by the power generation of the fuel cell stack 1. Therefore, the real hydrogen gas flow rate $Q$ of the hydrogen gas passage 111 is less than the hydrogen gas supply flow rate to the hydrogen gas passage 111.

If the hydrogen amount consumed by power generation of the fuel cell stack 1 increases, even if the temperature $T_{OP}$ and the hydrogen gas pressure $P_{OP}$ are both fixed, the real hydrogen flow rate $Q$ of the hydrogen gas passage 111 will decrease, and the hydrogen amount leaked to the case 2 from the fuel cell stack 1 as a result will also decrease. In this embodiment, the effect of the difference in the real hydrogen flow rate $Q$ on deterioration diagnosis of the seal member 107 is eliminated.

Therefore, the controller 10 performs a deterioration diagnosis routine shown in FIG. 9 which replaces the deterioration diagnosis routine of FIG. 7 of the second embodiment.

In this routine, a step S52 is provided instead of the step S51, a step S62 is provided instead of the step S61 and a step S72 is provided instead of the step S71 of the routine of FIG. 7. The processing of the other steps is identical to that of the routine of FIG. 7.

The controller 10, in a step S52, calculates the temperature correction factor $R_{temp}$ based on the temperature $T_{OP}$ of the fuel cell stack 1, and calculates the pressure correction factor $R_{press}$ based on the hydrogen gas pressure $P_{OP}$.

Also, the real hydrogen flow rate $Q$ is calculated from the supply flow rate of hydrogen gas to the fuel cell stack 1 and the power generation amount of the fuel cell stack 1 by a calculation method known in the art. Although the real hydrogen flow rate $Q$ of the hydrogen gas passage 111 decreases more downstream, the value calculated here is a typical value of the real hydrogen gas flow rate of the hydrogen gas passage 111.

The controller 10 calculates a flow rate deviation Q-Q0 from the real hydrogen gas flow rate $Q$, and calculates a flow rate correction factor $R_{flow}$ based on the flow rate deviation by looking up a map having the characteristics shown in FIG. 10 which is stored beforehand in the internal memory (ROM). $Q_0$ is the initial flow rate and corresponds to the real hydrogen gas flow rate of the hydrogen gas passage 111 under the setting conditions of the initial value $\Delta_{H2-ini}$. The flow rate correction factor $R_{flow}$ decreases the more the real hydrogen gas flow rate $Q$ exceeds the initial value $Q_0$, as shown in the figure. The flow rate correction factor $R_{flow}$ increases the more the real hydrogen gas flow rate $Q$ falls below the initial value $Q_0$. When the flow rate correction factor $R_{flow}$ is equal to the initial value $Q_0$, i.e., when the flow rate deviation is zero, the flow rate correction factor $R_{flow}$ is 1.

In a following step S62, the reference value $\Delta_{H2Rtpf}$ is calculated by the following equation (3):

$$\Delta_{H2Rtp} = \Delta_{H2-ini} \cdot R_{temp} \cdot R_{press} \cdot R_{flow} \qquad (3)$$

In the following step S72, the controller 10 compares the deviation $D\Delta_{op}$ obtained by subtracting the reference value $\Delta_{H2Rtpf}$ from the actual variation rate $\Delta_{H2}$ of hydrogen concentration, with zero.

Thus, by using the flow rate correction factor $R_{flow}$ according to the real hydrogen gas flow rate $Q$ as the reference value $\Delta_{H2Rtpf}$ used for deterioration diagnosis of the seal member 107, the effect of the real hydrogen gas flow rate $Q$ on the seal performance of the seal member 107 can be eliminated, and deterioration diagnosis precision can be further enhanced.

The contents of Tokugan 2004-008450, with a filing date of January 15, 2004 in Japan, are hereby incorporated by reference.

Although the invention has been described above by reference to certain embodiments of the invention, the invention is not limited to the embodiments described above. Modifications and variations of the embodiments described above will occur to those skilled in the art, within the scope of the claims.

For example, In each of the above embodiments, the parameters required for control are detected using sensors, but this invention can be applied to any seal member deterioration diagnosis device which can perform the claimed control using the claimed parameters regardless of how the parameters are acquired.

The embodiments of this invention in which an exclusive property or privilege is claimed are defined as follows:

**Claims**

1. A diagnosis device of a seal member (107) used in a fuel cell stack (1), the seal member (107) sealing a hydrogen gas passage (111) which is formed in the fuel cell stack (1) that is housed in a case (2), the fuel cell stack (1) generating electric power using hydrogen gas that is supplied from outside to the hydrogen passage (111), the diagnosis device comprising:

a ventilation device (7) which ventilates the case (2); and
a programmable controller (10) programmed to:

calculate a variation rate of a hydrogen concentration of gas in the case (2) after a supply of the hydrogen gas to the hydrogen passage (111) has started in a state where the ventilation device (7) is ventilating the case (2) (S2); and
diagnose a deterioration state of the seal member (107) based on the variation rate (S7, S71, S72).

2. The diagnosis device as defined in Claim 1, wherein the diagnosis device further comprises a sensor (8) which detects a hydrogen concentration of gas in the case (2);

3. The diagnosis device as defined in Claim 1 or Claim 2, wherein the controller (10) is further programmed to, after the ventilation device (7) starts ventilation of the case (2), determine whether or not a variation rate of the hydrogen concentration in a period until hydrogen gas is supplied to the hydrogen gas passage (111) is a negative value (S3), and when the variation rate is not a negative value, stop operation of the fuel cell stack (1) (S12).

4. The diagnosis device as defined in any one of Claim 1 through Claim 3, wherein the diagnosis device is further comprises a temperature sensor (9) which detects a temperature of the fuel cell stack (1), and the controller (10) is further programmed to, after hydrogen gas is supplied to the hydrogen gas passage (111), calculate a reference value which the variation rate should take based on the temperature of the fuel cell stack (1) (S6), and determine the deterioration of the seal member (107) based on a deviation between the variation rate and a reference value (S7).

5. The diagnosis device as defined in Claim 4, wherein the controller (10) is further programmed to determine the seal member (107) has deteriorated when the value of the variation rate is smaller than the value of the reference value (S7, S9, S10, S12).

6. The diagnosis device as defined in Claim 5, wherein the controller (10) is further programmed to stop operation of the fuel cell stack when the value of the variation rate is less than the reference value while the deviation is larger than a predetermined value (S9, S12).

7. The diagnosis device as defined in Claims 5 or 6, wherein the controller (10) is further programmed to, when the value of the variation rate is less than the value of the reference value, and the deviation is not larger than the predetermined value, output a warning which indicates the deterioration of the seal member (107) without stopping operation of the fuel cell stack (1) (S9, S10).

8. The diagnosis device as defined in Claim 7, wherein the controller (10) is further programmed to determine the degree of deterioration of the seal member (107) as being larger, the nearer the deviation is to the predetermined value (S10).

9. The diagnosis device as defined in any one of Claim 5 through Claim 8, wherein the controller (10) is further programmed to , when the value of the variation rate is not smaller than the value of the reference value, repeat the calculation of the deviation and the determination of deterioration of the seal member (11) based on the deviation, until the temperature of the fuel cell stack (1) reaches a predetermined temperature (S8).

10. The diagnosis device as defined in Claim 9, wherein the controller (10) is further programmed to stop operation of the fuel cell stack (1) if the hydrogen concentration exceeds a predetermined concentration when the temperature of the fuel cell stack (1) reaches a predetermined temperature (S11, S12).

11. The diagnosis device as defined in Claims 9 or 10, wherein the controller (10) is further programmed to start normal operation of the fuel cell stack (1) if the hydrogen concentration when the temperature of the fuel cell stack (1) reaches the predetermined temperature, does not exceed a predetermined concentration (S11, S13).

12. The diagnosis device as defined in any one of Claim 4 through Claim 11, wherein the diagnosis device further comprises a sensor (11) which detects a hydrogen gas pressure of the hydrogen gas passage (111), and the controller (10) is further programmed to calculate the reference value based on the temperature and the hydrogen gas pressure of the fuel cell stack (1) (S61).

13. The diagnosis device as defined in Claim 12, wherein the reference value decreases as the hydrogen gas pressure increases.

14. The diagnosis device as defined in Claims 12 or 13, wherein the controller (10) is further programmed to calculate a real hydrogen gas flow rate of the hydrogen gas passage (111) from the supply flow rate of hydrogen gas to the fuel cell stack (1) and the power generation amount of the fuel cell stack (1), and calculate the reference value based on the temperature, the hydrogen gas pressure and the real hydrogen gas flow rate.

15. The diagnosis device as defined in Claim 14, wherein the reference value decreases as the real hydrogen gas flow rate increases.

16. The diagnosis device as defined in any one of Claim 4 through Claim 15, wherein the reference value increases as the temperature of the fuel cell stack (1) increases.

17. The diagnosis device as defined in any one of Claim 1 through Claim 16, wherein the ventilation device (7) comprises an air inlet (5) and air outlet (6) formed in the case (2), and a ventilation fan (7) which aspirates outside air from the air inlet (5) into the case (2), and a sensor (8) is formed in the air outlet (6).

18. The diagnosis device as defined in Claim 17, wherein a position of the air inlet (5) in the case (2) is set lower than a position of the air outlet (6) in the case (2).

19. A diagnosis method of a seal member (107) used in a fuel cell stack (1), the seal member (107) sealing a hydrogen gas passage (111) which is formed in the fuel cell stack (1) that is housed in a case (2), the fuel cell stack (1) generating electric power using hydrogen gas that is supplied from outside to the hydrogen passage (111), the diagnosis method comprising:

    ventilating the case (2);
    calculating a variation rate of a hydrogen concentration of gas in the case (2) after a supply of the hydrogen gas to the hydrogen passage (111) has started in a state where the ventilating of the case (2) is performed (S2); and
    diagnosing a deterioration state of the seal member (107) based on the variation rate (S7, S71, S72).

FIG. 1

8 HYDROGEN CONCENTRATION SENSOR
9 TEMPERATURE SENSOR
11 PRESSURE SENSOR

CONTROLLER

WARNING DEVICE

EP 1 555 708 A2

**FIG. 2**

**FIG. 3**

FIG. 4

EP 1 555 708 A2

START

S1 READ HYDROGEN CONCENTRATION
AND TEMPERATURE

S2 START FAN OPERATION AND
MONITORING OF $C_{H2}$

S3 $\Delta_{H2} < 0$ ?  —NO→

YES

S4 HAS HYDROGEN GAS
SUPPLY STARTED ?  ←NO

YES

S5 CALCULATE $R_{temp}$ FROM $T_{OP}$

S6 $\Delta_{H2Rt} = \Delta_{H2\text{-}ini} \cdot R_{temp}$

S7 $D\Delta_{OP} \le 0$ ?  —NO→

YES

S9 $D\Delta_{OP} > D\Delta$ ?  —YES→

NO

S10 OUTPUT WARNING
SIGNAL

S8 $T_{OP} > T_{ini}$ ?  ←NO

YES

S11 $C_{H2} > C_{H2\text{-}in}$ ?  —NO→

YES

S13 SHIFT TO NORMAL
OPERATION

S12 SHUT DOWN
POWER PLANT

END

FIG. 5

FIG. 6

FIG. 8

FIG. 10

START

S1 READ HYDROGEN CONCENTRATION
AND TEMPERATURE

S2 START FAN OPERATION AND
MONITORING OF $C_{H2}$

S3 $\Delta_{H2} < 0$ ?   NO

YES

S4 HAS HYDROGEN GAS
SUPPLY STARTED ?   NO

YES

S51 CALCULATE $R_{temp}$ FROM $T_{OP}$ AND
$R_{press}$ FROM $P_{OP}$

S61 $\Delta_{H2Rt} = \Delta_{H2-ini} \cdot R_{temp} \cdot R_{press}$

S71 $D\Delta_{OP} \leq 0$ ?   NO

YES

S9 $D\Delta_{OP} > D\Delta$ ?   YES

NO

S10 OUTPUT WARNING
SIGNAL

S8 $T_{OP} > T_{ini}$ ?   NO

YES

S11 $C_{H2} > C_{H2-in}$ ?   NO

YES

S13 SHIFT TO NORMAL
OPERATION

S12 SHUT DOWN
POWER PLANT

END

FIG. 7

START

S1 — READ HYDROGEN CONCENTRATION AND TEMPERATURE

S2 — START FAN OPERATION AND MONITORING OF $C_{H2}$

S3 — $\Delta_{H2} < 0$ ? — NO / YES

S4 — HAS HYDROGEN GAS SUPPLY STARTED ? — NO / YES

S52 — CALCULATE $R_{temp}$ FROM $T_{OP}$, $R_{press}$ FROM $P_{OP}$ AND $R_{flow}$ FROM $Q$

S62 — $\Delta_{H2Rt} = \Delta_{H2-ini} \cdot R_{temp} \cdot R_{press} \cdot R_{flow}$

S72 — $D\Delta_{OP} \leq 0$ ? — NO / YES

S9 — $D\Delta_{OP} > D\Delta$ ? — YES / NO

S10 — OUTPUT WARNING SIGNAL

S8 — $T_{OP} > T_{ini}$ ? — NO / YES

S11 — $C_{H2} > C_{H2-in}$ ? — NO / YES

S13 — SHIFT TO NORMAL OPERATION

S12 — SHUT DOWN POWER PLANT

END

FIG. 9